(19) **Europäisches Patentamt / European Patent Office / Office européen des brevets**

(11) **EP 4 577 729 B1**

(12) # EUROPEAN PATENT SPECIFICATION

(45) Date of publication and mention
of the grant of the patent:
**06.05.2026 Bulletin 2026/19**

(21) Application number: **23792874.2**

(22) Date of filing: **24.08.2023**

(51) International Patent Classification (IPC):
**F01D 5/14** *(2006.01)* **F01D 11/00** *(2006.01)*
**F01D 11/02** *(2006.01)* **F01D 11/08** *(2006.01)*
**F01D 5/30** *(2006.01)* **F02C 7/28** *(2006.01)*
**F01D 11/12** *(2006.01)*

(52) Cooperative Patent Classification (CPC):
**F01D 5/08;** F01D 5/082; F01D 5/145; F01D 5/3007;
F01D 11/001; F01D 11/02; F01D 11/08;
F01D 11/127; F02C 7/28; F05D 2220/31;
F05D 2250/283; F05D 2250/294; F05D 2250/314;
F05D 2250/323; F05D 2250/71; (Cont.)

(86) International application number:
**PCT/CZ2023/050055**

(87) International publication number:
**WO 2024/041680 (29.02.2024 Gazette 2024/09)**

(54) **TURBINE ASSEMBLY OF AN AXIAL-FLOW TURBINE AND AXIAL-FLOW TURBINE**

TURBINENANORDNUNG EINER AXIALSTRÖMUNGSTURBINE UND
AXIALSTRÖMUNGSTURBINE

AGENCEMENT DE TURBINE D'UNE TURBINE À FLUX AXIAL ET TURBINE À FLUX AXIAL

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **25.08.2022 CZ 20220355**

(43) Date of publication of application:
**02.07.2025 Bulletin 2025/27**

(73) Proprietor: **Doosan Skoda Power A.S.
30100 Plzen, Jizni Predmesti (CZ)**

(72) Inventors:
• **SIMKA, Zdenek
34561 Hlohová 34 (CZ)**
• **PINKAS, Jan
34101 Velké Hydcice 55 (CZ)**

• **BÍLÝ, Miloslav
30100 Plzen, Jizní Predmestí (CZ)**

(74) Representative: **Havlík, Michal
Havlík Svorcík & Partners
Law and Patent Office
Hálkova 2
120 00 Praha 2 (CZ)**

(56) References cited:
EP-A1- 0 457 240    EP-A2- 0 894 945
WO-A1-80/00728    DE-A1- 2 140 720
DE-A1- 4 331 779    GB-A- 1 013 835
US-A- 3 291 447    US-A- 5 328 326
US-A1- 2004 136 828    US-B2- 10 018 046
US-B2- 10 041 368    US-B2- 8 147 180
US-B2- 9 476 315

(52) Cooperative Patent Classification (CPC): (Cont.)
F05D 2250/713; F05D 2260/602; F05D 2260/606

## Description

## TECHNICAL FIELD

The present invention concerns all types of axial-flow turbines in general, both steam turbines (where the working medium is steam) and gas turbines in general (where the medium may also be flue gas, gas, air, etc.), in all variants thereof, and it particularly concerns a turbine assembly of an axial-flow turbine and an axial-flow turbine.

The flow path of the axial-flow turbine consists of individual axial stages. The stages are formed alternately by consecutive wheels of stator and rotor.

The stator wheel consists mainly of a blade cascade which consists of individual airfoils placed side by side around the circumference of the stator wheel. On the outer circumference, the airfoils are fixed to the stator with the fixing part(s). The fixing part can either be integral (the ring in the assembled stator wheels) or each blade can have its own partial fixing part (in milled blades). On the inner diameter, the stator blade cascade is sealed against the rotor using a shroud or a disc with a non-contact seal. The stator wheel shroud can be either integral for up to half of the cascade or (for milled blades) it can be integral for each blade separately.

The rotor wheel consists mainly of a blade cascade which consists of individual airfoils placed side by side around the circumference of the rotor wheel. On the inner circumference, the airfoils are firmly fixed by fixing parts to the rotor or rotor disc. On the outer diameter, the rotor blade cascade is sealed against the rotor using rotor shroud with a non-contact seal. The rotor wheel shroud can be either common for several blades or integral for each blade separately in the case of milled blades.

The stator blades are designed to accelerate the flow of the working medium and direct it in the circumferential direction, the rotor blades are designed to capture the spinning flow and transfer the forces caused by flowing around to the rotor. The blade passages of the stator and rotor blade cascade together with the axial gaps between the blade cascades form the primary flow path.

The mounting arrangement of the rotor blades affects the stage design. The stage can be either of the drum type, where the blades forming the rotor wheel are attached directly to the rotor body, or it can be of the wheel or disc type, where the disc is formed on the rotor and then the blades attached to it. Drum-type stages are usually used for higher reaction stages, whereas wheel-type stages are usually used for low reaction stages.

The rotor must be allowed to rotate relatively with respect to the stator and possibly also have some axial movement, e.g. due to different deformations caused by thermal expansion. Due to the requirements for long durability, non-contact seals are usually used for this purpose which must have a certain gap or clearance. The gap/clearance is to be as minimal as possible, but cannot be closed completely. Therefore, manufacturers try to reduce the flow coefficient of the non-contact seal as much as possible. Typical representatives of such non-contact seals are labyrinths of various types - staggered labyrinth, look through labyrinth, fin-fin type seals. Non-contact seals also include honeycomb seals which work on a similar principle and can, therefore, be also considered as labyrinth seals, only the labyrinth fins have a more complicated shape. The non-contact seal together with the axial gaps in front and behind it, which connects them to the primary flow path, form the secondary flow path.

Thus, a small amount of working medium, called secondary flow, flows through the non-contact seal (as opposed to the primary flow passing through the blades). Secondary flows are a source of losses. The losses are caused by the leak itself - the medium bypassing the stator blades through seal does not accelerate to the required velocity, the medium bypassing the rotor blades cannot exert force on them and thus drive the rotor. Further losses occur at the point where the secondary flow of media leaked through the seal reenters into the primary flow. This is because there is a mixing of flows that have different direction and velocity. In addition, there is an unfavourable interaction of the two flows in the sensitive region upstream of the following blade cascade. This is where secondary vortexes are formed that can be reinforced by this interaction.

All these losses depend on the amount of medium flowing through the secondary flows. Therefore, one of the ways to reduce these losses is to reduce the flow rate through non-contact seals. However, this reduction has its limits due to the need for reliable operation throughout the operating range of the machine.

## STATE OF THE ART

In the standard design of the stage, the non-contact seal usually exits into the axial gap (the "cavity") between the shroud or disc and the blade fixing part in the direction of the main flow of the next wheel. The secondary flow exits the non-contact seal at a relatively high velocity, overcomes the axial gap by inertia and strikes the face of the fixing part of the next wheel, against which it bends and the axial component of the velocity turns into a radial one, the circumferential component of the flow being only slightly reduced by friction. Thus, the secondary flow enters the primary flow with a high radial component and, in the system of coordinates associated with the blade cascade of the next wheel, also with a high circumferential component. Both of these components are significantly different from the primary velocity components and the interaction of the flows thus results in high losses.

Various solutions are applied to reduce the losses arising from the interaction between the secondary flow returning from the seal to the primary flow. For example, US 9476315B2 describes a solution that counteracts the circumferential component of the secondary flow velocity. This reduces the difference between the circumferential component of the primary flow which is very small, and the circumferential component of the secondary flow velocity. This will reduce the losses caused by mixing of the two flows and also the loss due to increased secondary losses in the blade cascade further downstream. The disadvantage is that some of the kinetic energy of the secondary flows, which could be utilised, is lost.

Another way to reduce these losses are passages in the stator or rotor fixing parts which allow the secondary flow to bypass the next blade cascade and again fill the seal of the next downstream blade cascade (e.g. DE 4331779 A1, US 8147180 B2, US 5328326 or US 10041368 B2). The secondary flow does virtually not return to the primary flow, does not affect it and does not increase the losses in the blade cascade. The disadvantage is that the kinetic energy contained in the secondary flow is not used at all in this case.

Thus, none of the solutions mentioned above address the utilisation of kinetic energy of the secondary flow. Nevertheless, the kinetic energy of the secondary flow in the flow relative to the next blade cascade is bigger than the kinetic energy of the primary flow. The use of kinetic energy coming from the packing is dealt with e.g. in patent US5328326 (see FIG. 5 of this document) where the fixing part of the rotor blades is bevelled, the medium flowing from the stator wheel seal can thus flow between the rotor blades and its kinetic energy is at least partially utilised. However, a big disadvantage is that in the relative system of coordinates, the secondary flow has a big circumferential component in the direction opposite to the rotation of the rotor blades and the flow hits the suction (back) side of the rotor blades, which on the one hand causes their braking, and on the other hand it is the same direction in which the secondary vortex rotates. The secondary flow thus intensifies the secondary vortex and increases the secondary losses.

This problem is addressed in document DE2140720A1, where a similarly shaped fixing part at the hub of the rotor blades is described as the previous one, but with the addition of a protrusion from the stator wheel disc that overlaps this shape. The protrusion guides the secondary flow in the axial direction. Grooves are then formed on its inner side flowed around by the secondary flow, guiding the secondary flow in the correct circumferential direction. However, the efficiency of this guiding is very low and this solution is associated with large losses of kinetic energy of the secondary flow. In addition, this disc protrusion extends the axial length of the stage, which results in fewer stages for the given bearing distance and poorer turbine efficiency.

US10018046B2, US2004/136828A1, EP0894945A2, US3 291447A, GB1013835A, EP0457240A1, US5328326A, DE4331779A1 and US8147180B2 disclose the prior art.

## SUMMARY OF THE INVENTION

The above mentioned shortcomings of the current state-of-the-art are eliminated by the turbine assembly according to the present invention as defined in claims 1 and 9, respectively, and the axial-flow turbine according to claim 20.

These devices reduce the losses in the axial-flow turbine that occur when secondary flows that pass through leaks return to the primary flow.

In the case of a turbine assembly consisting of a stator wheel followed by the rotor wheel in the direction of the working medium flow, such turbine assembly is referred to as the turbine stage. For the purposes of describing the present invention, the general term of turbine assembly will include both the stator wheel-rotor wheel pair and the rotor wheel-stator wheel pair that follows in the direction of the main working medium flow.

In the turbine assembly according to the present invention, passages are formed in the fixing part (in the working medium flow direction) of the second wheel of the assembly (i.e. the rotor or stator wheel) at least between some adjacent blades for draining the working medium that has leaked through the labyrinth seal (in the working medium flow direction) of the first wheel of the assembly (i.e. the stator or rotor wheel) and introducing it back to the primary flow path.

The passage inlet according to the present invention is located on the side of the fixing part facing the labyrinth seal of the preceding wheel radially between a virtual circle with the centre in the turbine assembly axis and a radius of $R8_{in}$ - 0.6*A and a virtual circle with the centre in the turbine assembly axis and a radius of $R8_{out}$ + 0.6*A, where $R8_{in}$ is the inner and $R8_{out}$ is the outer radius of the radial gap (commonly referred to as radial clearance) of the last fin of the labyrinth seal, and A is the axial distance between the last fin of the labyrinth seal and the side of the fixing part of next wheel facing the labyrinth seal of the preceding wheel in operation (the axial distance between the radial clearance of the last fin and the blade fixing part may differ with some types of packing in operation and in the turbine's non-operating state).

The passage outlet according to the present invention exits into the primary flow passage between the blades at an axial distance of at least 1/5 of the total axial width of the blade cascade from the leading edge of the blades.

The solution according to the present invention reduces losses through mixing and interaction of the secondary flows with the primary one and increases the overall efficiency of the turbine assembly and thus the turbine as a whole. This solution is based on creating passages that appropriately drain the secondary flow from the non-contact seal into the blade cascade which is downstream the given non-contact seal. The passages guide the secondary flow so that it does not disturb the primary flow and its kinetic energy is used to reduce losses and increase the work done by the stage. The passages are located in the fixing parts of the wheels downstream the given packing, thus not increasing the axial length of the stage. There is enough space for the secondary flow to be guided correctly and only after such guiding, the secondary flow is introduced into the primary blade passage. Passages can be formed in the fixing parts of rotor blades, as well as in the fixing parts of stator blades for both drum and wheel (disc) type stages.

Advantageous embodiments are subject to dependent claims. Preferably in a turbine assembly according to the present invention:

- passages are formed between all the blades of the wheel,
- the passage inlet is located on the side of the fixing part facing the labyrinth seal of the preceding wheel radially at the level of the gap at the last fin of the labyrinth seal, i.e. at the same radial distance from the axis of the turbine assembly as the radial gap; thus the working medium can flow from the radial gap at the last fin of the labyrinth seal directly into the passage inlet,
- the passage inlet extends substantially across the entire width of the blade passage in the circumferential direction between adjacent blades, i.e. substantially across the entire spacing between the blades,
- the radial height of the passage at the inlet exceeds or equals the radial gap size of the last fin of the labyrinth seal ($R8_{out}$-$R8_{in}$), preferably lying between ($R8_{out}$-$R8_{in}$) and $4^*$($R8_{out}$-$R8_{in}$),
- the passage outlet exits into the primary flow passage between the blades at an angle (measured in the meridian plane from the end wall surface of the blade passage at the point of passage outlet) of less than 45°, preferably having an angle of less than 26°,
- at least one additional labyrinth seal fin is formed on the first wheel shroud of the assembly, and a cylindrical surface is formed on the fixing part of the second wheel (or directly on the rotor or stator) before the passage inlet, forming with this additional fin the last radial gap of the labyrinth seal and connecting this last radial gap of the labyrinth seal with the passage inlet. For a turbine assembly consisting of a stator wheel and a rotor wheel arranged downstream of it in the direction of the working medium flow (i.e. for the passages formed in the rotor), an additional fin may be formed directly on the stator disk and a cylindrical surface directly on the rotor wheel, in particular on the rotor disk (especially in the case of the wheel (disk) type of turbine stage).
- The passage outlet cross-section has a size ranging from 20% to 120%, preferably 85%, of the gap size of the last labyrinth seal fin per blade of the second wheel of the assembly. For the area of the $Fs_{seal}$ of the gap at the last stator labyrinth seal fin per rotor blade in the case of a conventional circular gap at the last stator labyrinth seal fin, the following shall apply

$$Fs_{seal} = \frac{\pi*(R8s_{out}^2 - R8s_{in}^2)}{Nr}$$, where **Nr** is the total number of rotor blades in the rotor wheel. For the area of $Fr_{seal}$ of the gap area of the last rotor labyrinth seal fin per stator blade in the case of a conventional circular gap at the last rotor labyrinth seal fin, the following shall apply

$$Fr_{seal} = \frac{\pi*(R8s_{out}^2 - R8s_{in}^2)}{Ns}$$, where **Ns** is the total number of stator blades in the stator wheel.

In the case of a turbine assembly consisting of a rotor wheel and a stator wheel arranged in the direction of the working medium flow downstream (i.e. for passages formed in the stator), further preferably:

- the passage outlet extends substantially across the entire width of the blade passage in the circumferential direction between adjacent stator wheel blades,
- the radial height of the passage at the outlet to the primary blade passage is 0.25 to 1.1 times its radial height at the inlet, preferably 70% of its radial height at the inlet,
- the passage outlet exits into the primary flow passage between the blades of the stator wheel at an axial distance of at least $1/2^*Bs$, preferably between $0.64^*Bs$ and $0.86^*Bs$ from the leading edge of the blades, where Bs is the total axial width of the stator blade cascade at the point of its connection to the fixing part.

All directions (radial, circumferential, axial, longitudinal, etc.) are named throughout the text in relation to the main axis of the turbine. The plane containing the main axis of the turbine is identified as "meridian" plane.

The invention will be explained in details using specific embodiments illustrated in the drawings shown:

Fig. 1 - longitudinal section of the flow path with axial stages of drum type with cylindrical end wall surfaces at the hub and tip and non-contact seals of the stator and rotor wheel of the staggered labyrinth type. Standard state-of-the-art design.

Fig. 2 - longitudinal section of the flow path with axial stages of drum type with cylindrical end wall surfaces at the hub and tip and non-contact seals of the stator and rotor wheel of the staggered labyrinth type. The passages in the fixing parts of the rotor and stator blades are shown.

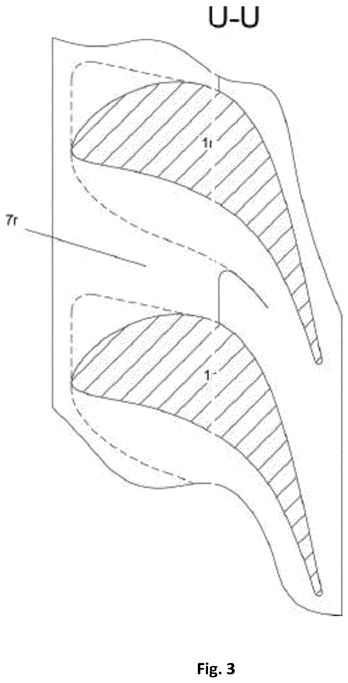

Fig. 3 - **U-U** section in Fig. 2 showing the radial centripetal view of the rotor blade fixing part with the passage shape and outlet.

Fig. 4a - **Y-Y** section in Fig. 2 showing the radial centrifugal view of the fixing parts of the stator blades with the passage shape. Embodiment with a separate deflector 9s for the design of assembled stator wheels with drawn airfoil profiles.

**Fig. 4b** - **Y-Y** section in Fig. 2 showing the radial centrifugal view of the fixing parts of the stator blades with the passage shape. Passage shape for stator wheel design with airfoils milled in one piece with fixing parts.

**Fig. 5 - Z-Z** section in Fig. 4a showing a section of the passage formed between the separate deflector 9s and the fixing part 2s for the design of the assembled stator wheels with drawn airfoil profiles.

**Fig. 6** - detail of the frontal **V** view of the rotor wheel in Fig. 2 showing the passage inlets in the rotor blade fixing parts.

**Fig. 7** - frontal **X-X** section of the rotor wheel in Fig. 2 showing the cross-sections of the passages in the fixing parts of the rotor blades.

**Fig. 8** - longitudinal section of the flow path with axial stages of drum type with conical end wall surfaces at the hub and tip and non-contact seals of stator and rotor wheel of the staggered labyrinth type. The passages in the fixing parts of the rotor and stator blades are shown.

**Fig. 9** - longitudinal section of the flow path with axial stages of drum type with cylindrical end wall surfaces at the hub and tip and non-contact seals of stator and rotor wheel of the look through labyrinth type. The passages in the fixing parts of the rotor and stator blades are shown.

**Fig. 10** - longitudinal section of the flow path with drum type axial stages with conical end wall surfaces at the hub and tip and non-contact seals of the stator and rotor wheel of the fin-fin type. The passages in the fixing parts of the rotor and stator blades are shown.

**Fig. 11** - longitudinal section through the flow path with axial stages of drum type with cylindrical end wall surfaces at the hub and tip and non-contact seals of stator and rotor wheel of a honeycomb type. The passages in the fixing parts of the rotor and stator blades are shown.

**Fig. 12** - longitudinal section of the flow path with axial stages of drum type with conical end wall surfaces at the hub and tip and non-contact seals of stator and rotor wheel of the staggered labyrinth type with additional fins in the outlet parts of the seals 10s and 10r. Shown are the passages in the fixing parts of the rotor and stator blades and the cylindrical surfaces 11r and 11s sealing against additional fins and guiding the working medium into the passage inlet.

**Fig. 13** - longitudinal section of the flow path with axial stages of the wheel (disc) type with conical end wall surfaces at the hub and tip and non-contact seals of the stator and rotor wheel of the staggered labyrinth type with additional fins in the outlet parts of the seals 10s and 10r. Shown are the passages in the fixing parts of the rotor and stator blades and the cylindrical surfaces 11r and 11s sealing against additional fins and guiding the working medium into the passage inlet.

## DESCRIPTION OF EMBODIMENTS

### Embodiment 1

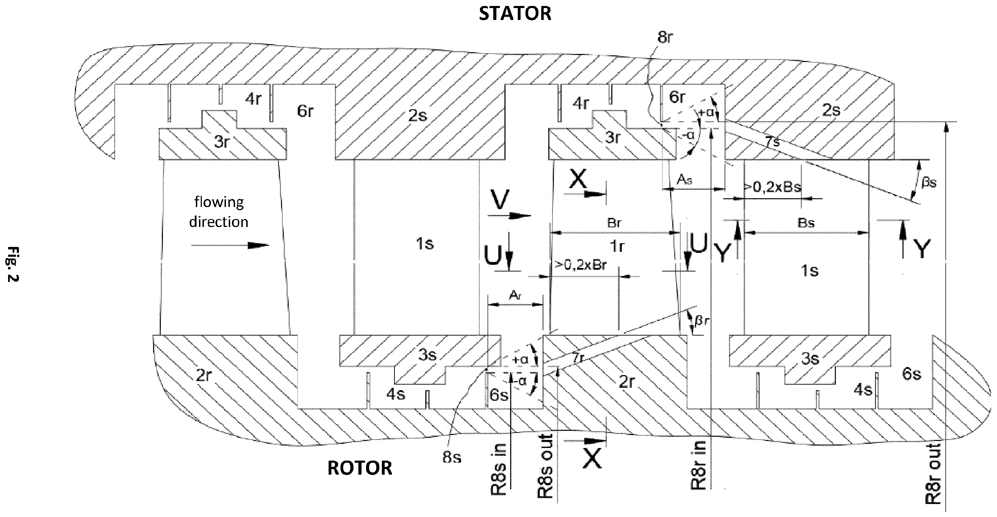

Bottom part of Fig. 2 shows a turbine assembly of an axial-flow turbine, consisting of a stator wheel and a rotor wheel arranged in the direction of the working medium flow downstream, or a turbine stage, in this case of the drum type, where the blades forming the rotor wheel are fixed directly to the rotor body. The stator wheel consists of airfoils of the blades 1s placed side by side around the circumference of the stator wheel to form a stator blade cascade, a fixing part 2s which fixes the blades 1s to the stator and which also seals the blade cascade on the outer circumference, the blade cascade being sealed against the rotor on the inner circumference by a shroud 3s with a non-contact labyrinth seal 4s. The rotor wheel consists of airfoils of the blades 1r arranged side by side around the circumference of the rotor wheel to form a rotor blade cascade, a fixing part 2r fixing the blades 1r to the rotor and that seals the blade cascade on the inner circumference, the blade cascade being sealed against the stator on the outer circumference with a shroud 3r with a non-contact labyrinth seal 4r. In this embodiment, it is the so called staggered labyrinth.

In the fixing part 2r of the rotor wheel, at least between some adjacent blades 1r, passages 7r are formed for draining the working medium that has leaked through the labyrinth seal 4s from the axial gap (the "cavity") 6s and introducing it back into the primary flow path. The inlet of the passage 7r is located on the side of the fixing part 2r facing the labyrinth seal 4s of the preceding stator wheel.

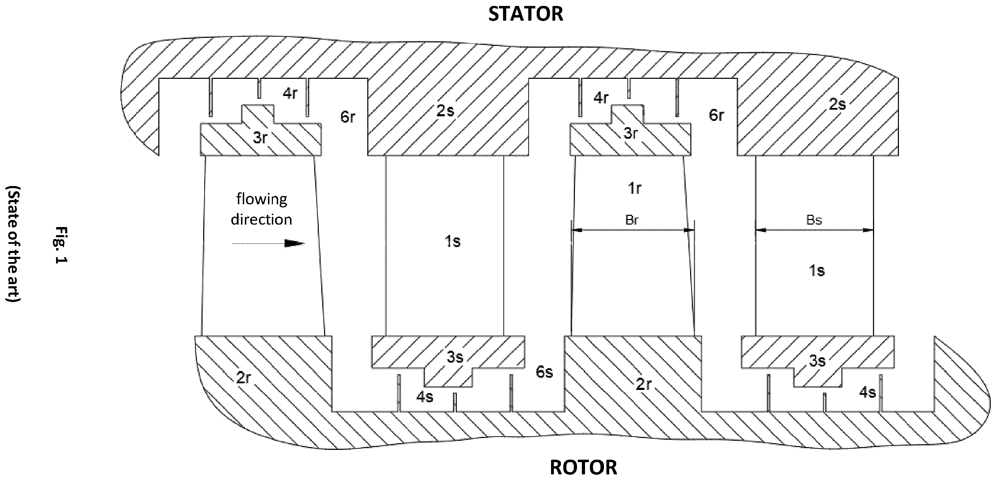

The secondary flow exiting the non-contact seal of the stator 4s enters the passage 7r, firstly because the passage is opposite the exit of the non-contact seal and the flow goes to it by inertia, secondly the passage exits into the rear part of the main rotor passage where the pressure is lower than at the passage inlet and the secondary flow is, therefore, sucked into the passage outlet. Thus, very little or no part of the secondary flow enters the main passage through the axial gap, as would be the case with a standard stage design according to Fig. 1. The flow disruption and the secondary vortex intensification are thus minimal.

Although it is advantageous if the passage inlet is located directly opposite the outlet of the non-contact seal, it has been found that the passage works well if its inlet is located over a relatively wide range of angles (-α, +α), certainly for α from 0° to approximately 30°, or even more, measured in the meridian plane.

The passage shape is such that it guides the secondary flow in the meridian plane at an acute angle $\beta_r$ into the primary flow so that the radial component is small. In the circumferential direction, the passage is shaped so that the secondary flow is drained to the suction (back) side of the blade with the lowest possible losses. Here, the secondary flow after entering the main passage, due to its higher relative kinetic energy, will accelerate the boundary layer that would otherwise form on the flowed around surface of the fixing part 2r, further reducing rotor blade losses.

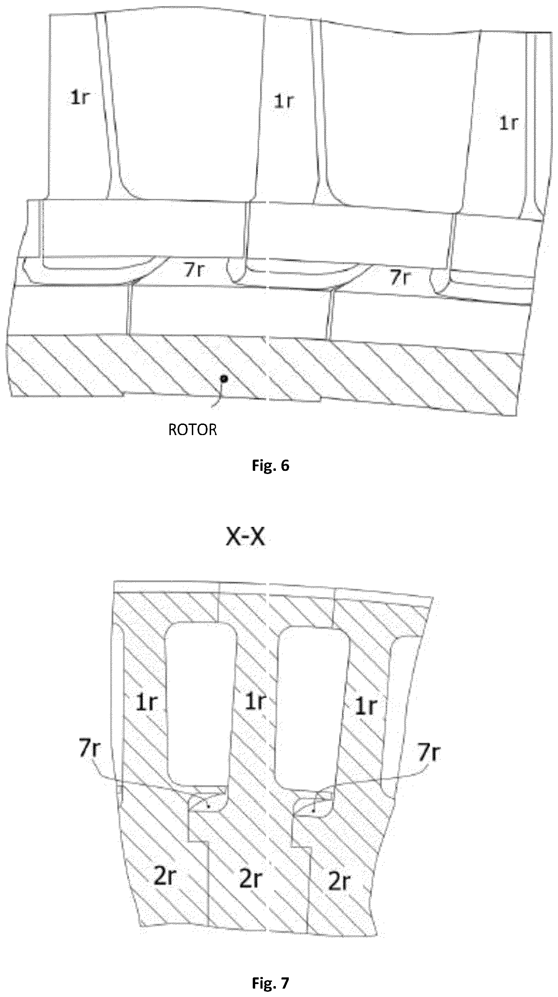

The passage may be formed, for example, by milling so that its walls defining it in the circumferential direction are formed on the fixing parts of adjacent blades and its wall limiting it radially on the side closer to the main passage is formed on one blade and its wall limiting it radially on the side further away from the main passage is formed on the other blade. The passage is thus formed by attaching the blades together, as shown in Fig. 6 and Fig. 7. But this is only one of the options of creating passages. Another option is, for example, drilling or fixing other component(s) to the fixing part 2r or airfoils to close the passage relative to the main passage.

## Embodiment 2

Another possible application of the patented principle constitutes the passages formed in the fixing part 2s of the stator blades which are shown in the upper part of Fig. 2. Here, the use is limited to stages that have another stage immediately upstream with a non-contact seal 4r on the rotor shroud 3r. There is no benefit in using passages at the first stages of the flow paths or at the stages that are downstream the working media extraction from the flow path.

The passage design can be described as follows - in the fixing part 2s of the stator wheel, passages 7s are formed at least between some adjacent blades 1s for draining the working medium which has leaked through the labyrinth seal 4r, from the axial gap (the "cavity") 6r into the primary flow path. The inlet of the passage 7s is located on the side of the fixing part 2s facing the labyrinth seal 4r of the preceding rotor wheel.

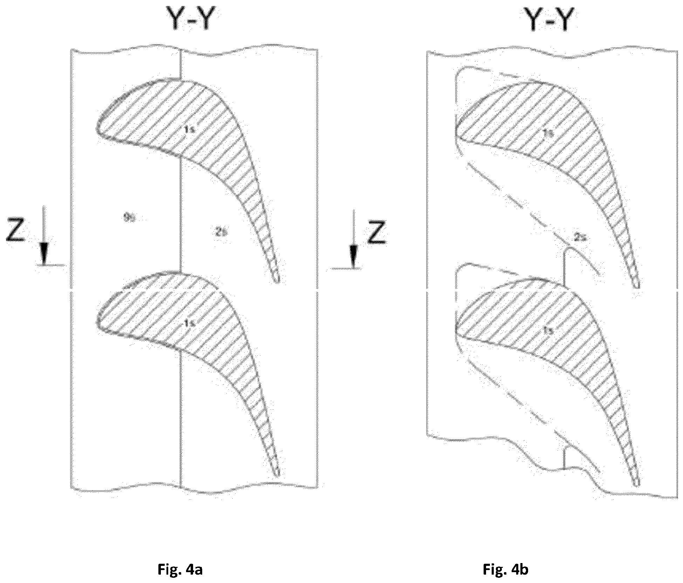

The passage can be formed by milling in a similar manner as described above for the passages in the rotor fixing parts and its function is then analogous to that described. This technology is suitable for blades produced by milling, where the airfoil and its fixing part are made of one piece. The passage can then be shaped aerodynamically in an optimal case, as shown in Fig. 4b. The passage should have as little resistance as possible and should have sufficient flow area at the outlet to discharge the medium.

## Embodiment 3

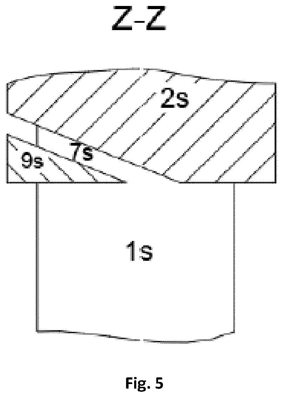

A different technology is suitable for airfoils of stator blades 1s made of drawn profiles and then assembled with a ring forming the fixing part 2s. The ring of the fixing part 2s is shaped to have the shape of the outer end wall surface of the passage, and the inner end wall surface is then formed by the deflector 9s which is a separate component here with cutouts for the blades 1s which is inserted between the blades 1s. The passage 7s then takes the form of a slot between the deflector 9s and the fixing part 2s, see Fig. 5. The airfoils of the blades 1s pass through the slot 7s and define the shape of the passage 7s in the circumferential direction. The passage outlet 7s then takes a form of a slot across the entire width of the primary blade passage, see Fig. 4a. The secondary flow passing through the slot separates from the profile surface as it flows around the profile, which is associated with losses, but the important thing is that it is prevented by the deflector 9s from flowing in the radial direction along the airfoil and amplifying the secondary vortex. Despite these losses, most of the secondary flow retains high kinetic energy and re-accelerates the boundary layer at the passage outlet, thus reducing the losses in the stator blade cascade 1s. Another beneficial effect is that the secondary flow of the medium that has a higher energy than the primary flow, is guided in a centripetal sidelong direction underneath the shroud of the following rotor wheel 1r and thus does not leak into the rotor seal 4r. The work done by it is greater than the work that would be done by the same flow rate of the primary flow.

## Embodiment 4

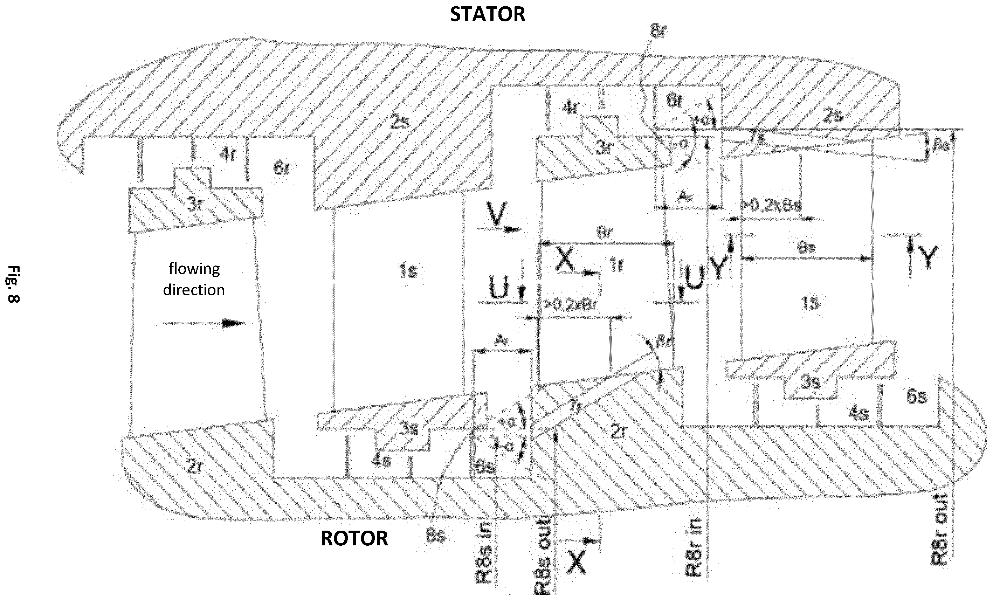

Fig. 8 shows a solution similar to the previous examples 1 - 3, but the stages shown differ in the conical surfaces on the end wall surfaces of the fixing parts 2s and 2r and on the shrouds 3s and 3r.

## Embodiment 5

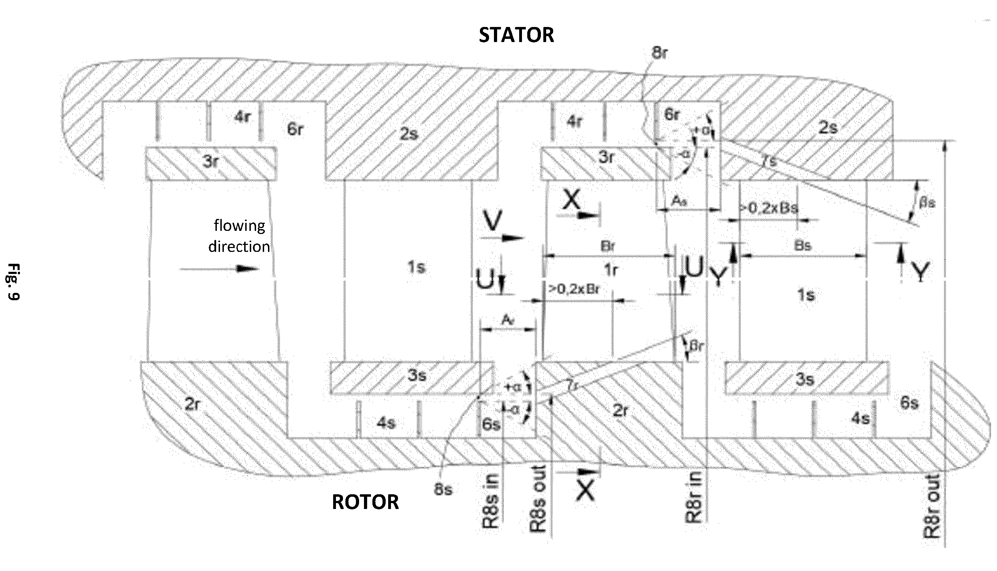

Fig. 9 shows a solution similar to the previous examples 1 - 3, but differs in the non-contact seals of the look through labyrinth type.

## Embodiment 6

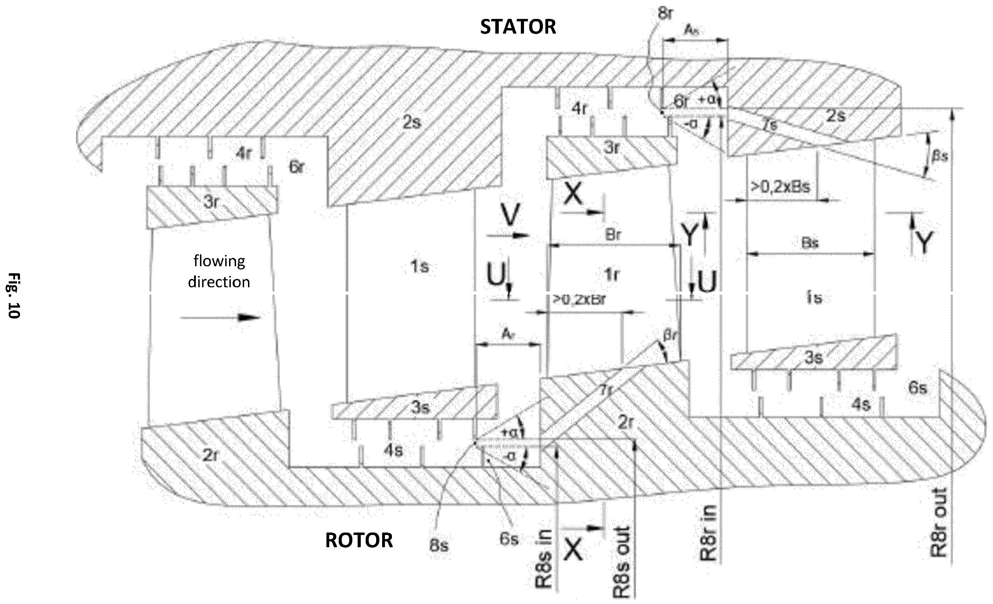

Fig. 10 shows a solution similar to the previous examples 1 - 3, but differs in the non-contact seals of the fin-fin type.

## Embodiment 7

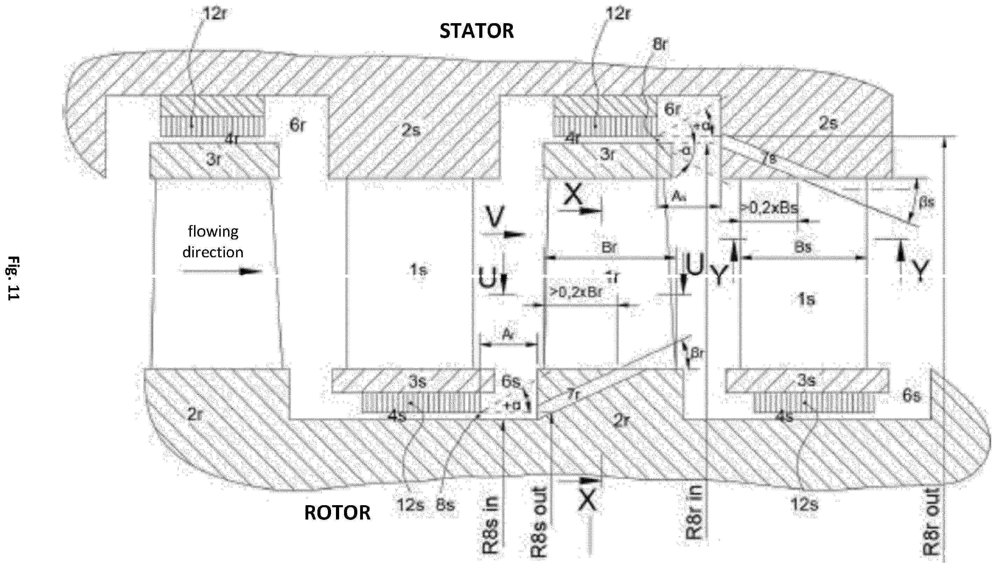

Fig. 11 shows a solution similar to the previous examples 1 - 3, but differs in non-contact seals of the honeycomb type 12s, 12r.

## Embodiment 8

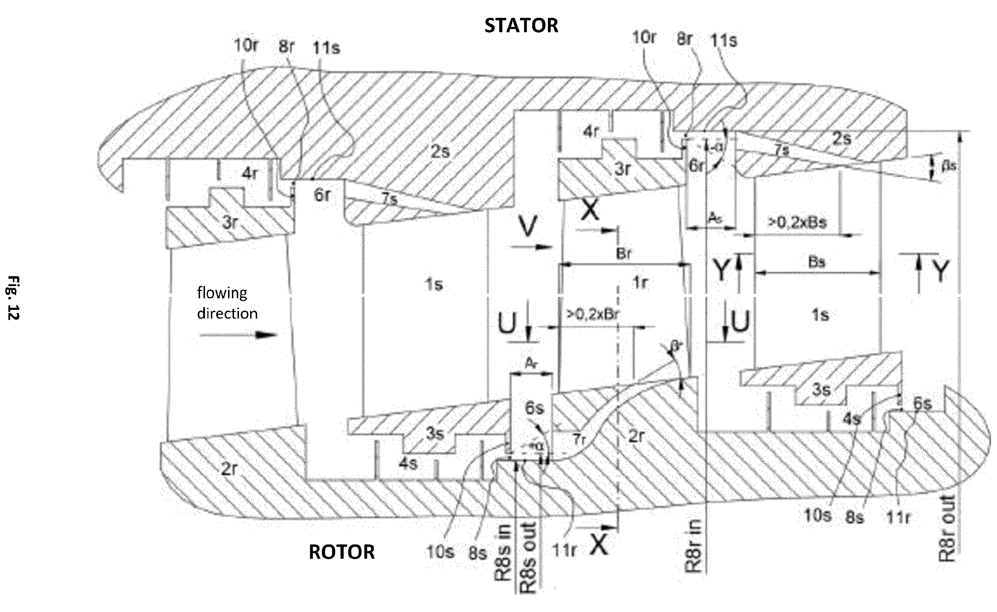

According to Fig. 12, it is the same as the previous examples 1 - 3, but differs in the additional fins 10s and 10r in the outlet parts of the non-contact seals 4s and 4r. The additional fins improve sealing and, together with the opposing cylindrical surfaces 11r and 11s, better guide the flow into the passages 7r and 7s.

**Embodiment 9**

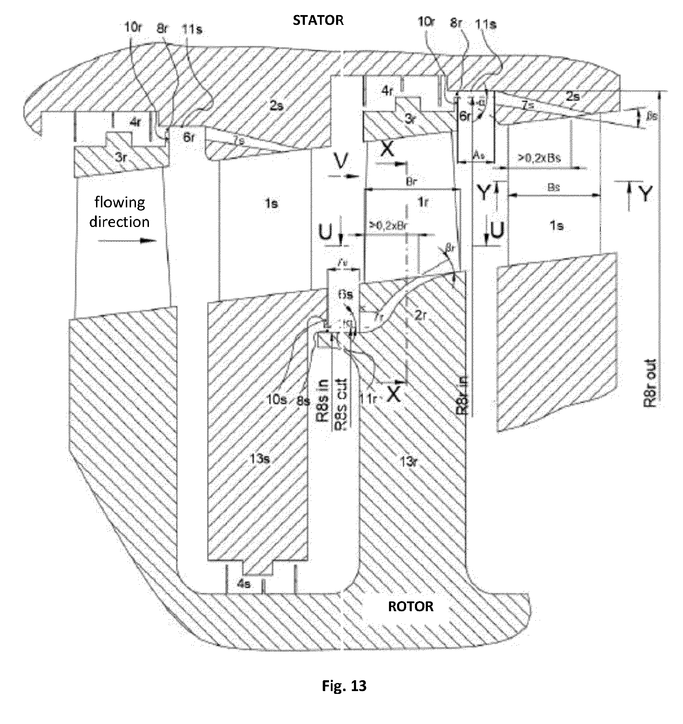

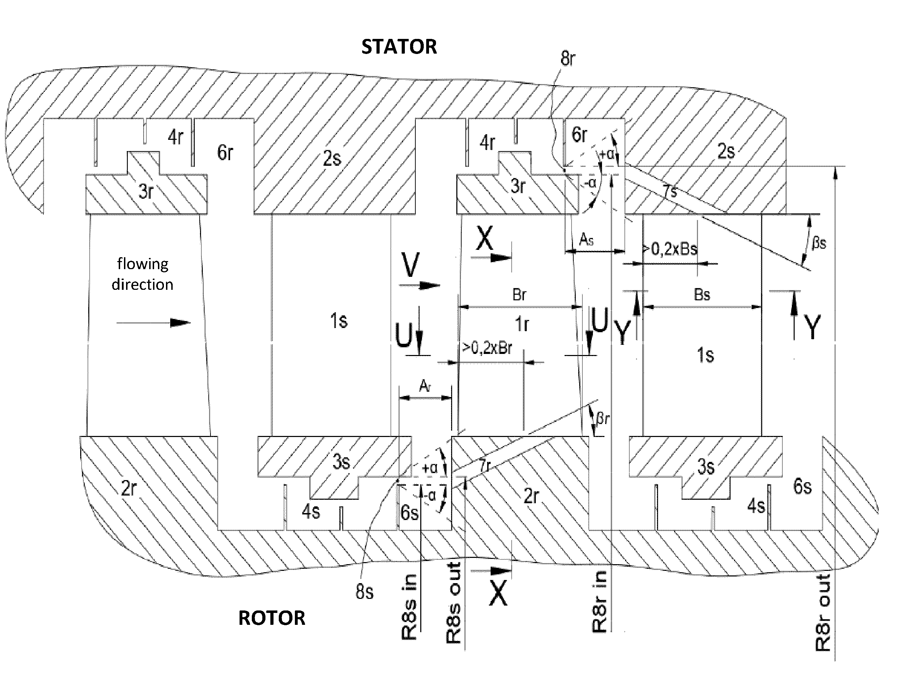

According to Fig. 13, the arrangement is for wheel (disc) type stages. Unlike the drum type stages (previous examples 1 - 8), the stator blade cascade in this embodiment is not sealed on its inner diameter with a shroud, but with a disc 13s which carries a non-contact seal 4s on its inner diameter. Discs 13r are formed on the rotor, to which the fixing parts 2r of the rotor blades 1r are attached. As the radial distance between the stator wheel seal 4s and the passage 7r in the fixing part 2r is too large, the kinetic energy of the secondary flow exiting 4s is lost along this path. Therefore, at least one additional fin 10s is formed on the outer diameter of the stator disc 13s which, together with the cylindrical surface 11r formed on the rotor disc 13r or on the fixing part 2r, re-accelerates the secondary flow, guiding it into the passage 7r. In this embodiment, this additional fin then represents the last fin of the labyrinth seal as defined in the claims.

**Note on Marking:**

The addition of the lower-case letter "r" or "s" to the reference characters and individual dimension markings indicates the respective element / dimension related to the rotor ("r") or stator ("s"), while in some cases there are markings without these "indices" in the description where it is not distinguished whether the respective element / dimension is related to the rotor or stator. This should make the analogy of the solution for the passages in the rotor wheel or stator wheel clearer.

**Claims**

1. Turbine assembly of an axial-flow turbine, consisting of a stator wheel and a rotor wheel arranged in the direction of a working medium flow downstream, or turbine stage,

   - wherein the stator wheel consists of airfoils of blades (1s) arranged side by side around the circumference of the stator wheel to form a stator blade cascade, and a fixing part (2s) fixing the blades (1s) to the stator and also sealing the blade cascade at the outer circumference, wherein the blade cascade is sealed to the rotor at the inner circumference by a shroud (3s) or a stator disc (13s) with a non-contact seal (4s), and
   - the rotor wheel consists of airfoils of blades (1r) placed side by side around the circumference of the rotor wheel to form a rotor blade cascade, a fixing part (2r) fixing the blades (1r) to the rotor or rotor disc (13r) and which also seals the blade cascade on the inner circumference, wherein on the outer circumference the blade cascade is sealed against the stator by a shroud (3r) with a non-contact seal (4r),

   **characterized in that** passages (7r) are formed in the fixing part (2r) of the rotor wheel at least between some adjacent blades (1r) for draining the working medium which has leaked through the non-contact seal (4s), from the axial gap (6s) into the primary flow path, wherein
   - the inlet of the passage (7r) is located on the side of the fixing part (2r) facing the non-contact seal (4s) of the preceding stator wheel radially between

      - a virtual circle with the centre on the axis of the turbine assembly and with a radius of

      $$R8s_{in} - 0.6*Ar$$

      - and a virtual circle with the centre on the axis of the turbine assembly and a radius of

      $$R8s_{out} + 0.6*Ar$$

   where

      $R8s_{in}$ is the inner radius of the radial gap (8s) at the last fin of the non-contact seal (4s),
      $R8s_{out}$ is the outer radius of the radial gap (8s) at the last fin of the non-contact seal (4s), and
      Ar is the axial distance between the last fin of the non-contact seal (4s) and the side of the fixing part (2r) of the next rotor wheel facing the non-contact seal (4s) of the preceding stator wheel in operation,

   - the outlet of the passage (7r) exits into the primary flow passage between the blades (1r) at an axial distance of at least **1/5*Br** from the leading edge of the blades (1r), where Br is the total axial width of the rotor blade cascade at the point of its connection to the fixing part (2r).

2. The turbine assembly according to claim 1, **characterized in that** the passages (7r) are formed between each two adjacent blades (1r) of the rotor wheel.

3. The turbine assembly according to claim 1, **characterized in that** the inlet of the passage (7r) is located on the side of the fixing part (2r) facing the non-contact seal (4s) of the preceding stator wheel radially at the level of the gap (8s) at the last fin of the non-contact seal (4s).

4. The turbine assembly according to claim 1, **characterized in that** the inlet of the passage (7r) extends in a circumferential direction across the entire width of the blade passage in a circumferential direction between adjacent blades (1r) of the rotor wheel.

5. The turbine assembly according to claim 1, **characterized in that** the radial height of the passage (7r) at the inlet exceeds or equals the radial size of the gap (8s) at the last fin of the non-contact seal (4s) $(R8s_{out} - R8s_{in})$, preferably is between $(R8s_{out} - R8s_{in})$ and $4*(R8s_{out}-R8s_{in})$.

6. The turbine assembly according to claim 1, **characterized in that** the passage (7r) outlet cross-section has an area ranging from 20% to 120%, preferably 85%, of the area $Fs_{seal}$ of the gap (8s) at the last fin of the non-contact seal (4s) attributable to one rotor blade.

7. The turbine assembly according to claim 1, **characterized in that** the outlet of the passage (7r) exits into the primary flow passage between the blades (1r) at an angle βr, measured in the meridian plane from the blade passage end wall surface at the outlet of the passage (7r), of less than 45°, wherein preferably the angle βr has a magnitude of less than 26°.

8. The turbine assembly according to claim 1, **characterized in that**
at least another additional fin (10s) of the non-contact seal (4s) is formed on the shroud (3s) of the stator wheel or on the stator disc (13s), and at least one cylindrical surface (11r) is formed on the fixing part (2r) or directly on the rotor or on the rotor disc (13r), forming together with this additional fin the last radial gap (8s) of the non-contact seal (4s) and connecting radially the inner side of this last radial gap (8s) of the non-contact seal (4s) with radially inner side of the inlet of the passage (7r).

9. Turbine assembly of an axial-flow turbine, consisting of a rotor wheel and a stator wheel arranged in the direction of a working medium flow downstream,

   - wherein the rotor wheel consists of airfoils of blades (1r) arranged side by side around the circumference of the rotor wheel to form a rotor blade cascade, a fixing part (2r) fixing the blades (1r) to the rotor or rotor disk (13r) and that seals the blade cascade on the inner circumference, wherein the blade cascade being sealed against the stator on the outer circumference with a shroud (3r) with a non-contact seal (4r), and
   - the stator wheel consists of airfoils of blades (1s) placed side by side around the circumference of the stator wheel to form a stator blade cascade, a fixing part (2s) fixing the blades (1s) to the stator and which also seals the blade cascade on the outer circumference, wherein on the inner circumference the blade cascade is sealed against the rotor by a shroud (3s) or a stator disc (13s) with a non-contact seal (4s), **characterized in that** at least between some adjacent blades (1s), passages (7s) are formed in the fixing part (2s) of the stator wheel for draining the working medium that has escaped the non-contact seal (4r) from the axial gap (6r) into the primary flow path, wherein
- the inlet of the passage (7s) is located on the side of the fixing part (2s) facing the non-contact seal (4r) of the preceding rotor wheel radially between

   - a virtual circle with the centre on the axis of the turbine assembly and with a radius of

$$R8r_{in} - 0.6*As$$

   - and a virtual circle with the centre on the axis of the turbine assembly and a radius of

$$R8r_{out} + 0.6*As$$

where

   $R8r_{in}$ is the inner radius of the radial gap (8r) at the last fin of the non-contact seal (4r),
   $R8r_{out}$ is the outer radius of the radial gap (8r) at the last fin of the non-contact seal (4r), and
   As is the axial distance between the last fin of the non-contact seal (4r) and the side of the fixing part (2s) of the following stator wheel facing the non-contact seal (4r) of the preceding rotor wheel in operation,

- the outlet of the passage (7s) exits into the primary flow passage between the blades (1s) at an axial distance of at least $1/5*Bs$ from the leading edge of the blades (1s), where Bs is the total axial width of the stator blade cascade at the point of its connection to the fixing part (2s).

10. The turbine assembly according to claim 9, **characterized in that** passages (7s) are formed between each two adjacent blades (1s) of the stator wheel.

11. The turbine assembly according to claim 9, **charac-**

**terized in that** the inlet of the passage (7s) is located on the side of the fixing part (2s) facing the non-contact seal (4r) of the preceding rotor wheel radially at the level of the gap (8r) at the last fin of the non-contact seal (4r).

12. The turbine assembly according to claim 9, **characterized in that** the inlet of the passage (7s) extends in a circumferential direction across the entire width of the blade passage in a circumferential direction between adjacent blades (1s) of the stator wheel.

13. The turbine assembly according to claim 9, **characterized in that** the radial height of the passage (7s) at the inlet exceeds or equals the radial size of the gap (8r) at the last fin of the non-contact seal (4r) $(R8r_{out} - R8r_{in})$, preferably is between $(R8r_{out} - R8r_{in})$ and $4*(R8r_{out}-R8r_{in})$.

14. The turbine assembly according to claim 9, **characterized in that** the outlet of the passage (7s) extends in a circumferential direction across the entire width of the blade passage in a circumferential direction between adjacent blades (1s) of the stator wheel.

15. The turbine assembly according to claim 14, **characterized in that** the radial height of the passage (7s) at the outlet to the primary blade passage is 0.25 to 1.1 times its radial height at the inlet, preferably 70% of its radial height at the inlet.

16. The turbine assembly according to claim 9, **characterized in that** the outlet of the passage (7s) exits into the primary flow passage between the blades (1s) at an axial distance of at least $1/2*Bs$ from the leading edge of the blades (1s), preferably between $0.64*Bs$ and $0.86*Bs$ from the leading edge of the blades (1s), where Bs is the total axial width of the stator blade cascade at the point of its connection to the fixing part (2s).

17. The turbine assembly according to claim 9, **characterized in that** the outlet cross-section of the passage (7s) has an area ranging from 20% to 120%, preferably 85%, of the area $Fr_{seal}$ of the gap (8r) at the last fin of the non-contact seal (4r) attributable to one stator blade.

18. The turbine assembly according to claim 9, **characterized in that** the outlet of the passage (7s) exits into the primary flow passage between the blades (1s) at an angle βs, measured in the meridian plane from the blade passage end wall surface at the outlet of the passage (7s), of less than 45°, wherein preferably the angle βs has a magnitude of less than 26°.

19. The turbine assembly according to claim 9, **characterized in that** at least another additional fin (10r) of the non-contact seal (4r) is formed on the shroud (3r) of the rotor wheel, and a cylindrical surface (11s) is formed on the fixing part (2s) or directly on the stator, forming together with this additional fin the last radial gap (8r) of the non-contact seal (4r) and connecting radially the outer side of this last radial gap (8r) of the non-contact seal (4r) with radially outer side of the inlet of the passage (7s).

20. Axial-flow turbine, **characterized in that** it comprises at least one turbine assembly according to claim 1 and/or at least one turbine assembly according to claim 9.

**Patentansprüche**

1. Turbinenanordnung einer Axialturbine, bestehend aus einem Statorrad und einem in Strömungsrichtung des Betriebsmediums nachgeordneten Rotorrad, d. h. einer Turbinenstufe,

- wobei das Statorrad aus Schaufelblättern (1s) besteht, die nebeneinander am Umfang des Statorrades angeordnet sind und somit das Stator-Schaufelgitter ausbilden, aus einem Befestigungsteil (2s), mit dem die Schaufeln (1s) am Stator befestigt sind und gleichzeitig das Schaufelgitter am Außenumfang abdichtet, wobei das Schaufelgitter am Innenumfang gegenüber dem Rotor durch ein Band (3s) oder eine Statorscheibe (13s) mit einer berührungslosen Dichtung (4s) abgedichtet ist, und
- das Rotorrad aus Schaufelblättern (1r) besteht, die nebeneinander am Umfang des Rotorrades angeordnet sind und somit ein Rotor-Schaufelgitter ausbilden, aus einem Befestigungsteil (2r), mit dem die Schaufeln (1r) am Rotor oder an der Rotorscheibe (13r) befestigt sind und die gleichzeitig das Schaufelgitter am Innenumfang abdichtet, wobei das Schaufelgitter am Außenumfang gegenüber dem Stator durch ein Band (3r) mit einer berührungslosen Dichtung (4r) abgedichtet ist,

**dadurch gekennzeichnet, dass**
im Befestigungsteil (2r) des Rotorrades zumindest zwischen einigen benachbarten Schaufeln (1r) Kanäle (7r) zur Ableitung des Betriebsmediums ausgebildet sind, das durch die berührungslose Dichtung (4s) aus dem axialen Spalt (6s) in den Hauptströmungsweg entwichen ist, wobei
- sich der Einlass des Kanals (7r) auf der Seite des Befestigungsteils (2r) befindet, die der kontaktlosen Dichtung (4s) des vorhergehenden Statorrades zugewandt ist radial zwischen

- dem gedachten Kreis mit dem Mittelpunkt in der Achse der Turbinenanordnung und dem Radius

$$R8s_{in} - 0{,}6 * Ar$$

- und dem gedachten Kreis mit dem Mittelpunkt in der Achse der Turbinenanordnung und dem Radius

$$R8s_{out} + 0{,}6 * Ar$$

wobei

$R8s_{in}$ der Innenradius des Radialspalts (8s) an der letzten Kante der berührungslosen Dichtung (4s) ist,
$R8s_{out}$ der Außenradius des Radialspalts (8s) an der letzten Kante der berührungslosen Dichtung (4s) ist, und
Ar der axiale Abstand zwischen der letzten Kante der berührungslosen Dichtung (4s) und der Seite des Befestigungsteils (2r) des folgenden Rotorrads ist, die während des Betriebs der berührungslosen Dichtung (4s) des vorhergehenden Statorrades zugewandt ist,

- der Auslass des Kanals (7r) in den Hauptströmungskanal zwischen den Schaufeln (1r) in einem axialen Abstand von mindestens **1/5*Br** von der Anströmseite der Schaufeln (1r) mündet, wobei Br die gesamte axiale Breite des Rotorgitters an der Stelle seiner Verbindung mit dem Befestigungsteil (2r) ist.

2. Turbinenanordnung nach Anspruch 1, **dadurch gekennzeichnet, dass** die Kanäle (7r) zwischen jeweils zwei benachbarten Schaufeln (1r) des Rotorrades ausgebildet sind.

3. Turbinenanordnung nach Anspruch 1, **dadurch gekennzeichnet, dass** sich der Einlass des Kanals (7r) auf der Seite des Befestigungsteils (2r) befindet, die der kontaktlosen Dichtung (4s) des vorhergehenden Statorrades radial in Höhe des Spaltes (8s) an der letzten Kante der kontaktlosen Dichtung (4s) zugewandt ist.

4. Turbinenanordnung nach Anspruch 1, **dadurch gekennzeichnet, dass** sich der Einlass des Kanals (7r) in Umfangsrichtung über die gesamte Breite des Zwischenkanals in Umfangsrichtung zwischen benachbarten Schaufeln (1r) des Rotorrades erstreckt.

5. Turbinenanordnung nach Anspruch 1, **dadurch ge-**

**kennzeichnet, dass** die radiale Höhe des Kanals (7r) am Einlass größer oder gleich der radialen Größe des Spalts (8s) an der letzten Kante der berührungslosen Dichtung (4s) (**R8s_{out} - R8s_{in}**) ist, vorteilhaft zwischen (**R8s_{out} - R8s_{in}**) und **4*(R8s_{out} - R8s_{in}**) liegt.

6. Turbinenanordnung nach Anspruch 1, **dadurch gekennzeichnet, dass** der AuslassQuerschnitt des Kanals (7r) eine Fläche zwischen 20 % und 120 %, vorteilhaft 85 %, der Fläche **Fs_{seal}** des Spaltes (8s) an der letzten Kante der berührungslosen Dichtung (4s) pro Rotorschaufel aufweist.

7. Turbinenanordnung nach Anspruch 1, **dadurch gekennzeichnet, dass** der Auslass des Kanals (7r) in den Hauptströmungskanal zwischen den Schaufeln (1r) unter einem Winkel βr mündet, gemessen in der Meridionalebene von der Fläche, die den Zwischenkanal an der Mündung des Kanals (7r) begrenzt, kleiner als 45° ist, wobei der Winkel βr vorteilhaft kleiner als 26° ist.

8. Turbinenanordnung nach Anspruch 1, **dadurch gekennzeichnet, dass**

auf dem Band (3s) des Statorrades bzw. auf der Statorscheibe (13s) mindestens eine weitere zusätzliche Kante (10s) der berührungslosen Dichtung (4s) ausgebildet ist und
auf dem Befestigungsteil (2r) oder direkt auf dem Rotor bzw. auf der Rotorscheibe (13r) eine zylindrische Fläche (11r) ausgebildet ist, die mit dieser zusätzlichen Kante den letzten Radialspalt (8s) der berührungslosen Dichtung (4s) ausbildet und die radiale Innenseite dieses letzten Radialspalts (8s) der berührungslosen Dichtung (4s) mit der radial inneren Seite des Einlasses des Kanals (7r) verbindet.

9. Turbinenanordnung einer Axialturbine, bestehend aus einem Rotorrad und einem in Strömungsrichtung des Betriebsmediums nachgeordneten Statorrad,

- wobei das Rotorrad aus Blättern (1r) besteht, die nebeneinander am Umfang des Rotorrades angeordnet sind und somit ein Rotorschaufelgitter bilden, aus einem Befestigungsteil (2r), mit dem die Schaufeln (1r) am Rotor oder an der Rotorscheibe (13r) befestigt sind und die gleichzeitig das Schaufelgitter am Innenumfang abdichtet, wobei das Schaufelgitter am Außenumfang gegenüber dem Stator durch ein Band (3r) mit einer berührungslosen Dichtung (4r) abgedichtet ist, und
- wobei das Statorrad aus Schaufelblättern (1s) besteht, die nebeneinander am Umfang des Statorrades angeordnet sind und somit das Stator-Schaufelgitter ausbilden, aus einem Befestigungsteil (2s), mit dem die Schaufeln (1s) am Stator befestigt sind und gleichzeitig das Schaufelgitter am Außenumfang abdichtet, wobei das Schaufelgitter am Innenumfang gegenüber dem Rotor durch ein Band (3s) oder eine Statorscheibe (13s) mit einer berührungslosen Dichtung (4s) abgedichtet ist,

**dadurch gekennzeichnet, dass**

im Befestigungsteil (2s) des Statorrades zumindest zwischen einigen benachbarten Schaufeln (1s) Kanäle (7s) zur Ableitung des Betriebsmediums ausgebildet sind, das durch die berührungslose Dichtung (4r) aus dem axialen Spalt (6r) in den Hauptströmungsweg entwichen ist, wobei

- sich der Einlass des Kanals (7s) auf der Seite des Befestigungsteils (2s) befindet, die der kontaktlosen Dichtung (4r) des vorhergehenden Rotorrades zugewandt ist radial zwischen

    - dem gedachten Kreis mit dem Mittelpunkt in der Achse der Turbinenanordnung und dem Radius

$$R8r_{in} - 0{,}6 * As$$

    - und dem gedachten Kreis mit dem Mittelpunkt in der Achse der Turbinenanordnung und dem Radius

$$R8r_{out} + 0{,}6 * As$$

wobei

    $R8r_{in}$ der Innenradius des Radialspalts (8r) an der letzten Kante der berührungslosen Dichtung (4r) ist,
    $R8r_{out}$ der Außenradius des Radialspalts (8r) an der letzten Kante der berührungslosen Dichtung (4r) ist, und As der axiale Abstand zwischen der letzten Kante der berührungslosen Dichtung (4r) und der Seite des Befestigungsteils (2s) des folgenden Statorrads ist, die während des Betriebs der berührungslosen Dichtung (4r) des vorhergehenden Rotorrads zugewandt ist,

- der Auslass des Kanals (7s) in den Hauptströmungskanal zwischen den Schaufeln (1s) in einem axialen Abstand von mindestens **1/5*Bs** von der Anströmseite der Schaufeln (1s) mündet, wobei Br die gesamte axiale Breite des Statorgitters an der Stelle seiner Verbindung mit dem Befestigungsteil (2s) ist.

10. Turbinenanordnung nach Anspruch 9, **dadurch gekennzeichnet, dass** die Kanäle (7s) zwischen jeweils zwei benachbarten Schaufeln (1s) des Statorrades ausgebildet sind.

11. Turbinenanordnung nach Anspruch 9, **dadurch gekennzeichnet, dass** sich der Einlass des Kanals (7s) auf der Seite des Befestigungsteils (2s) befindet, die der kontaktlosen Dichtung (4r) des vorhergehenden Rotorrades radial in Höhe des Spaltes (8r) an der letzten Kante der kontaktlosen Dichtung (4r) zugewandt ist.

12. Turbinenanordnung nach Anspruch 9, **dadurch gekennzeichnet, dass** sich der Einlass des Kanals (7s) in Umfangsrichtung über die gesamte Breite des Zwischenkanals in Umfangsrichtung zwischen benachbarten Schaufeln (1s) des Statorrades erstreckt.

13. Turbinenanordnung nach Anspruch 9, **dadurch gekennzeichnet, dass** die radiale Höhe des Kanals (7s) am Einlass größer oder gleich der radialen Größe des Spalts (8r) an der letzten Kante der berührungslosen Dichtung (4r) **($R8r_{out}$ - $R8r_{in}$)** ist, vorteilhaft zwischen **($R8r_{out}$ - $R8r_{in}$)** und **4*($R8r_{out}$ - $R8r_{in}$)** liegt.

14. Turbinenanordnung nach Anspruch 9, **dadurch gekennzeichnet, dass** sich der Auslass des Kanals (7s) in Umfangsrichtung über die gesamte Breite des Zwischenkanals in Umfangsrichtung zwischen benachbarten Schaufeln (1s) des Rotorrades erstreckt.

15. Turbinenanordnung gemäß Anspruch 14, **dadurch gekennzeichnet, dass** die radiale Höhe des Kanals (7s) am Auslass zum Hauptkanal zwischen den Schaufeln das 0,25- bis 1,1-fache seiner radialen Höhe am Einlass beträgt, vorteilhaft 70 % seiner radialen Höhe am Einlass.

16. Turbinenanordnung gemäß Anspruch 9, **dadurch gekennzeichnet, dass** der Auslass des Kanals (7s) in den Hauptströmungskanal zwischen den Schaufeln (1s) in einem axialen Abstand von mindestens **1/2*Bs** von der Anströmseite der Schaufeln (1s) mündet, vorteilhaft zwischen **0,64*Bs** und **0,86*Bs** von der Anströmseite der Schaufeln (1s), wobei Bs die gesamte axiale Breite des Statorgitters an der Stelle seiner Verbindung mit dem Befestigungsteil (2s) ist.

17. Turbinenanordnung nach Anspruch 9, **dadurch gekennzeichnet, dass** der Auslassquerschnitt des Kanals (7s) eine Fläche zwischen 20 % und 120 %, vorteilhaft 85 %, der Fläche **$Fr_{seal}$** des Spaltes (8r) an der letzten Kante der berührungslosen Dichtung (4r) pro Statorschaufel aufweist.

18. Turbinenanordnung nach Anspruch 9, **dadurch gekennzeichnet, dass** der Auslass des Kanals (7s) in den Hauptströmungskanal zwischen den Schaufeln (1s) unter einem Winkel βs mündet, gemessen in der Meridionalebene von der Fläche, die den Zwischenkanal an der Mündung des Kanals (7s) begrenzt, kleiner als 45° ist, wobei der Winkel βs vorteilhaft kleiner als 26° ist.

19. Turbinenanordnung nach Anspruch 9, **dadurch gekennzeichnet, dass**

auf dem Band (3r) des Rotorrades mindestens eine weitere zusätzliche Kante (10s) der berührungslosen Dichtung (4r) ausgebildet ist und auf dem Befestigungsteil (2s) oder direkt auf dem Stator eine zylindrische Fläche (11s) ausgebildet ist, die mit dieser zusätzlichen Kante den letzten Radialspalt (8r) der berührungslosen Dichtung (4r) ausbildet und die radiale Außenseite dieses letzten Radialspalts (8r) der berührungslosen Dichtung (4r) mit der radial inneren Seite des Einlasses des Kanals (7s) verbindet.

20. Axialturbine, **dadurch gekennzeichnet, dass** sie mindestens eine Turbinenanordnung gemäß Anspruch 1 und/oder mindestens eine Turbinenanordnung gemäß Anspruch 9 umfasst.

**Revendications**

1. Ensemble de turbine d'une turbine axiale, composé d'une roue de stator et d'une roue de rotor disposée en aval de cette dernière dans le sens d'écoulement du fluide de travail, ou étage de turbine,

- la roue de stator étant composée d'aubes (1s) disposées les unes à côté des autres à la circonférence de la roue de stator et formant ainsi une grille d'aubes de stator, d'une partie de fixation (2s) par laquelle les aubes (1s) sont fixées au stator et qui assure également l'étanchéité de la grille d'aubes sur la circonférence extérieure, la grille d'aubes étant obturée sur la circonférence intérieure par rapport au rotor au moyen d'un bandage (3s) ou un disque de stator (13s) avec un joint d'étanchéité sans contact (4s), et
- la roue de rotor étant composée d'aubes (1r) disposées les unes à côté des autres à la circonférence de la roue de rotor et formant ainsi une grille d'aubes de rotor, d'une partie de fixation (2r) par laquelle les aubes (1r) sont fixées au rotor ou au disque de rotor (13r) et qui assure également l'étanchéité de la grille d'aubes sur la circonférence intérieure, la grille d'aubes étant obturée sur la circonférence extérieure par rapport au rotor au moyen d'un bandage (3r) avec un joint d'étanchéité sans contact (4r),
**caractérisé en ce que**
dans la partie de fixation (2r) de la roue du rotor, des canaux (7r) sont formés au moins entre certaines aubes adjacentes (1r) pour évacuer le fluide de travail qui s'est échappé de l'espace axial (6s) vers le chemin d'écoulement principal par le joint d'étanchéité sans contact (4s),
- l'entrée du canal (7r) se trouve du côté de la partie de fixation (2r) tournée vers le joint d'étanchéité sans contact (4s) de la roue de stator précédente, radialement entre

- un cercle imaginaire dont le centre est situé dans l'axe de l'ensemble de turbine et dont le rayon est

$$R8s_{in} - 0{,}6*Ar$$

- et un cercle imaginaire dont le centre est situé dans l'axe de l'ensemble de turbine et dont le rayon est

$$R8s_{out} + 0{,}6*Ar$$

où

$R8s_{in}$ est le rayon intérieur de l'espace radial (8s) au niveau de la dernière lèvre du joint d'étanchéité sans contact (4s),
$R8s_{out}$ est le rayon extérieur de l'espace radial (8s) au niveau de la dernière lèvre du joint d'étanchéité sans contact (4s), et
Ar est la distance axiale entre la dernière lèvre du joint d'étanchéité sans contact (4s) et le côté de la partie de fixation (2r) de la roue de rotor suivante, tournée vers le joint d'étanchéité sans contact (4s) de la roue de stator précédente pendant le fonctionnement,

- la sortie du canal (7r) débouche dans le canal d'écoulement principal entre les aubes (1r) à une distance axiale d'au moins **1/5\*Br** du bord d'attaque des aubes (1r), où Br est la largeur axiale totale de la grille du rotor au point où elle est reliée à la partie de fixation (2r).

2. Ensemble de turbine selon la revendication 1, **caractérisé en ce que** les canaux (7r) sont formés entre chaque paire d'aubes adjacentes (1r) de la roue de rotor.

3. Ensemble de turbine selon la revendication 1, **caractérisé en ce que** l'entrée du canal (7r) est située du côté de la partie de fixation (2r) tournée vers le joint d'étanchéité sans contact (4s) de la roue de stator précédente, radialement au niveau de l'espace (8s) près de la dernière lèvre du joint d'étanchéité sans contact (4s).

4. Ensemble de turbine selon la revendication 1, **caractérisé en ce que**, dans le sens circonférentiel, l'entrée du canal (7r) s'étend sur toute la largeur du canal inter-aubes dans le sens circonférentiel entre les aubes adjacentes (1r) de la roue du rotor.

5. Ensemble de turbine selon la revendication 1, **caractérisé en ce que** la hauteur radiale du canal (7r) à l'entrée est supérieure ou égale à la dimension radiale de l'espace (8s) au niveau de la dernière lèvre du joint d'étanchéité sans contact (4s) $(R8s_{out} - R8s_{in})$, de préférence comprise entre $(R8s_{out} - R8s_{in})$ et $4*(R8s_{out} - R8s_{in})$.

6. Ensemble de turbine selon la revendication 1, **caractérisé en ce que** la section de sortie du canal (7r) a une surface comprise entre 20 % et 120 %, de préférence 85 %, de la surface $Fs_{seal}$ de l'espace (8s) au niveau de la dernière lèvre du joint d'étanchéité sans contact (4s) correspondant à une aube du rotor.

7. Ensemble de turbine selon la revendication 1, **caractérisé en ce que** la sortie du canal (7r) débouche dans le canal d'écoulement principal entre les aubes (1r) sous un angle βr, mesuré dans le plan méridien à partir de la surface délimitant le canal inter-aubes à la sortie du canal (7r), inférieur à 45°, la valeur de l'angle βr est de préférence inférieure à 26°.

8. Ensemble de turbine selon la revendication 1, **caractérisé en ce que** le bandage (3s) de la roue de stator, ou, le cas échéant, le disque de stator (13s), comporte au moins une autre lèvre supplémentaire (10s) du joint d'étanchéité sans contact (4s), et la partie de fixation (2r), ou directement le rotor, ou, le cas échéant, le disque de rotor (13r), présente une surface cylindrique (11r), formant avec cette lèvre supplémentaire le dernier espace radial (8s) du joint d'étanchéité sans contact (4s) et reliant radialement le côté intérieur de ce dernier espace radial (8s) du joint d'étanchéité sans contact (4s) au côté radialement intérieur de l'entrée du canal (7r).

9. Ensemble de turbine d'une turbine axiale, composé d'une roue de rotor et d'une roue de stator disposée en aval de cette dernière dans le sens d'écoulement du fluide de travail,

- la roue de rotor étant composée d'aubes (1r) disposées les unes à côté des autres à la circonférence de la roue de rotor et formant ainsi une grille d'aubes de rotor, d'une partie de fixation (2r) par laquelle les aubes (1r) sont fixées au rotor ou au disque de rotor (13r) et qui assure également l'étanchéité de la grille d'aubes sur la circonférence intérieure, la grille d'aubes étant étanchée sur la circonférence extérieure par rapport au stator au moyen d'un bandage (3r) avec un joint d'étanchéité sans contact (4r), et
- la roue de stator étant composée d'aubes (1s) disposées les unes à côté des autres à la circonférence de la roue de stator, formant ainsi une grille d'aubes de stator, d'une partie de fixation (2s) par laquelle les aubes (1s) sont fixées au stator et qui assure également l'étanchéité de la grille d'aubes sur la circonférence extérieure, la grille d'aubes étant obturée sur la circonférence par rapport au rotor au moyen d'un bandage (3s) ou un disque de stator (13s) avec un joint d'étanchéité sans contact (4s),

**caractérisé en ce que**

dans la partie de fixation (2s) de la roue de stator, des canaux (7s) sont formés au moins entre certaines aubes adjacentes (1s) pour évacuer le fluide de travail qui s'est échappé de l'espace axial (6r) vers le chemin d'écoulement principal par le joint d'étanchéité sans contact (4r),

- l'entrée du canal (7s) se trouve du côté de la partie de fixation (2s) tournée vers le joint d'étanchéité sans contact (4r) de la roue de rotor précédente, radialement entre

 - un cercle imaginaire dont le centre est situé dans l'axe de l'ensemble de turbine et dont le rayon est

$$R8r_{in} - 0{,}6*As$$

 - et un cercle imaginaire dont le centre est situé dans l'axe de l'ensemble de turbine et dont le rayon est

$$R8r_{out} + 0{,}6*As$$

 où

 $R8r_{in}$ est le rayon intérieur de l'espace radial (8r) au niveau de la dernière lèvre du joint d'étanchéité sans contact (4r), $R8r_{out}$ est le rayon extérieur de l'espace radial (8r) au niveau de la dernière lèvre du joint d'étanchéité sans contact (4r), et

 As est la distance axiale entre la dernière lèvre du joint d'étanchéité sans contact (4r) et le côté de la partie de fixation (2s) de la roue de stator suivante, tournée vers le joint d'étanchéité sans contact (4r) de la roue de rotor précédente pendant le fonctionnement,

- la sortie du canal (7s) débouche dans le canal d'écoulement principal entre les aubes (1s) à une distance axiale d'au moins **1/5\*Bs** du bord d'attaque des aubes (1s), où Bs est la largeur axiale totale de la grille du stator au point où elle est reliée à la partie de fixation (2s).

**10.** Ensemble de turbine selon la revendication 9, **caractérisé en ce que** les canaux (7s) sont formés entre chaque paire d'aubes adjacentes (1s) de la roue de stator.

**11.** Ensemble de turbine selon la revendication 9, **caractérisé en ce que** l'entrée du canal (7s) est située du côté de la partie de fixation (2s) tournée vers le joint d'étanchéité sans contact (4r) de la roue rotative précédente, radialement au niveau de l'espace (8r) près de la dernière lèvre du joint d'étanchéité sans contact (4r).

**12.** Ensemble de turbine selon la revendication 9, **caractérisé en ce que**, dans le sens circonférentiel, l'entrée du canal (7s) s'étend sur toute la largeur du canal inter-aubes dans le sens circonférentiel entre les aubes adjacentes (1s) de la roue de stator.

**13.** Ensemble de turbine selon la revendication 9, **caractérisé en ce que** la hauteur radiale du canal (7s) à l'entrée est supérieure ou égale à la dimension radiale de l'espace (8r) au niveau de la dernière lèvre du joint d'étanchéité sans contact (4r) ($R8r_{out}$ - $R8r_{in}$), de préférence comprise entre ($R8r_{out}$ - $R8r_{in}$) et $4*(R8r_{out}$ - $R8r_{in})$.

**14.** Ensemble de turbine selon la revendication 9, **caractérisé en ce que**, dans le sens circonférentiel, la sortie du canal (7s) s'étend sur toute la largeur du canal inter-aubes dans le sens circonférentiel entre les aubes adjacentes (1s) de la roue de stator.

**15.** Ensemble de turbine selon la revendication 14, **caractérisé en ce que** la hauteur radiale du canal (7s) à la sortie vers le canal inter-aubes principal est comprise entre 0,25 et 1,1 fois sa hauteur radiale à l'entrée, de préférence 70 % de sa hauteur radiale à l'entrée.

**16.** Ensemble de turbine selon la revendication 9, **caractérisé en ce que** la sortie du canal (7s) débouche dans le canal d'écoulement principal entre les aubes (1s) à une distance axiale d'au moins **1/2\*Bs** du bord d'attaque des aubes (1s), de préférence entre **0,64\*Bs** et **0,86\*Bs** du bord d'attaque des aubes (1s), où Bs est la largeur axiale totale de la grille du stator au point où elle est reliée à la partie de fixation (2s).

**17.** Ensemble de turbine selon la revendication 9, **caractérisé en ce que** la section de sortie du canal (7s) a une surface comprise entre 20 % et 120 %, de préférence 85 %, de la surface $Fr_{seal}$ de l'espace (8r) au niveau de la dernière lèvre du joint d'étanchéité sans contact (4r) correspondant à une aube de stator.

**18.** Ensemble de turbine selon la revendication 9, **caractérisé en ce que** la sortie du canal (7s) débouche dans le canal d'écoulement principal entre les aubes (1s) sous un angle βs, mesuré dans le plan méridien à partir de la surface délimitant le canal inter-aubes à la sortie du canal (7s), inférieur à 45°, la valeur de l'angle βs est de préférence inférieure à 26°.

**19.** Ensemble de turbine selon la revendication 9, **caractérisé en ce que** le bandage (3r) de la roue du rotor comporte au moins une autre lèvre supplémentaire (10r) du joint d'étanchéité sans contact (4r), et la partie de fixation (2s), ou directement le stator, présente une surface cylindrique (11s), formant avec cette lèvre supplémentaire le dernier espace radial (8r) du joint d'étanchéité sans contact (4r) et reliant radialement le côté extérieur de ce dernier espace radial (8r) du joint d'étanchéité sans contact (4r) au côté radialement extérieur de l'entrée du canal (7s).

**20.** Turbine axiale, **caractérisée en ce qu'**elle comprend au moins un ensemble de turbine selon la revendication 1 et/ou au moins un ensemble de turbine selon la revendication 9.

Fig. 1

(State of the art)

Fig. 2

U-U

Fig. 3

**Fig. 4a**                    **Fig. 4b**

Z-Z

Fig. 5

ROTOR

**Fig. 6**

X-X

**Fig. 7**

Fig. 8

Fig. 9

Fig. 10

STATOR

ROTOR

flowing direction

EP 4 577 729 B1

24

**Fig. 11**

**Fig. 12**

**Fig. 13**

## REFERENCES CITED IN THE DESCRIPTION

**Patent documents cited in the description**

- US 9476315 B2
- DE 4331779 A1
- US 8147180 B2
- US 5328326 A
- US 10041368 B2
- DE 2140720 A1

- US 10018046 B2
- US 2004136828 A1
- EP 0894945 A2
- US 3291447 A
- GB 1013835 A
- EP 0457240 A1